# EUROPEAN PATENT APPLICATION

(11) **EP 3 695 915 A1**
(43) Date of publication of application: **19.08.2020**
(21) Application number: 18865508.8
(22) Date of filing: 28.08.2018
(51) Int. Cl.: B21D 39/00, B21D 28/24, B21D 28/34, B21D 37/14, B21D 39/03, F16B 4/00, F16B 5/04

(54) **PIERCING ELEMENT PUNCHING METHOD, ELEMENT COMPOSITE, AND WELDING MEMBER**

(30) Priority: 13.10.2017 JP 2017199758
(71) Applicant: Kabushiki Kaisha Kobe Seiko Sho (Kobe Steel, Ltd.), Kobe-shi, Hyogo 651-8585 (JP)
(72) Inventor: KIMURA, Takayuki, Kobe-shi Hyogo 651-2271 (JP)
(74) Representative: Müller-Boré & Partner Patentanwälte PartG mbB
(86) International application number: PCT/JP2018/031825
(87) International publication number: WO 2019/073710

(57) **Abstract**

A method for driving a piercing element 10 includes: preparing a plate material 20, the piercing element 10, a preceding punch 50, and a die 40; arranging the plate material 20 on a hole portion 41 of the die 40; arranging the piercing element 10 and the preceding punch 50 in order downward from above on the plate material 20 and on a position corresponding to the hole portion 41; punching the plate material 20 via the preceding punch 50 by pressing the piercing element 10 downward; dropping a punched piece 21 downward from the hole portion 41; following the punching of the plate material 20, driving the piercing element 10 to be embedded in the plate material 20 and causing the plate material 20 to bite a constricted portion 14; and dropping the preceding punch downward from the hole portion 41.

## Description

### TECHNICAL FIELD

The present invention relates to a method for driving a piercing element, an element composite, and a welding member.

### BACKGROUND ART

As one method of joining two metal members, a method referred to as an element arc spot welding is known. In the element arc spot welding, an interposed component made of a metal of the same type as the other metal member is attached to a hole portion provided in one metal member, and this interposed component and the other metal member are arc-spot welded. That is, the element arc spot welding is a technique for indirectly integrating two metal members via an interposed component. Advantageously, in the element arc spot welding, since two metal members are welded with the interposition of an interposed component rather than being directly welded, dissimilar metals generally regarded as difficult to join can be joined.

For example, Patent Document 1 discloses, as an example of an element arc spot welding method, a method of joining a steel member and an aluminum alloy member by spot welding using a steel piercing metal (interposed component). In this method, first, an aluminum alloy member is processed into a mode suitable for welding. Specifically, forming a hole portion in the aluminum alloy member and attaching a steel piercing metal to the hole portion processes the aluminum alloy member into a welding member. Next, the steel piercing metal of the welding member and the steel member are spot-welded.

### PRIOR ART DOCUMENT

### PATENT DOCUMENT

Patent Document 1: JP 2013-22622 A

### SUMMARY OF THE INVENTION

### PROBLEMS TO BE SOLVED BY THE INVENTION

The element arc spot welding disclosed in Patent Document 1 has three problems when the above welding member is formed. First, if the steel piercing metal is transported before welding in a state where the steel piercing metal is attached to the hole portion of the aluminum alloy member, since the steel piercing metal is not fixed, there is a risk that the steel piercing metal falls off the aluminum alloy member. Secondly, since it is necessary to provide a hole portion in the aluminum alloy member in advance, the number of steps is increased as compared with ordinary welding. Third, since the steel piercing metal is not completely embedded in the aluminum alloy member, the steel piercing metal protrudes from the surface of the aluminum alloy member and the thickness is partially increased, so that this composite lacks versatility as a welding member.

An object of the present invention is to provide a method for driving a piercing element for manufacturing a welding member which makes it difficult for an interposed component (piercing element) to fall off a plate material, which prevents an increase in the number of manufacturing steps, and which has a uniform thickness. In addition, an object is to provide an element composite suitable for this method. Furthermore, an object is to provide a welding member which the piercing element is less likely to fall off, which prevents an increase in the number of manufacturing steps, and which has a uniform thickness.

### MEANS FOR SOLVING THE PROBLEMS

A first aspect of the present invention is to provide a method for driving a piercing element, the method including: preparing a plate material made of metal, a piercing element including an upper portion, a lower portion, and a connecting portion configured to connect the upper portion and the lower portion, the connecting portion being smaller than the upper portion and the lower portion in a plan view, the piercing element including a constricted portion defined by a lower surface of the upper portion, an upper surface of the lower portion, and a side surface of the connecting portion, the piercing element having a thickness equal to or less than a thickness of the plate material, a preceding punch being larger than the lower portion in a plan view, and a die having a larger hole portion than the preceding punch in a plan view; arranging the plate material on the hole portion of the die; arranging the piercing element and the preceding punch in order downward from above on the plate material and on a position corresponding to the hole portion; punching the plate material via the preceding punch by pressing the piercing element downward, and driving the piercing element to be embedded in the plate material; and fixing the piercing element to the plate material by the plate material biting the constricted portion due to the plastic deformation of the plate material in the driving.

According to this configuration, the piercing element can be driven into the plate material with overcoming the above three problems. Specifically, first, when the piercing element is driven into the plate material, the plate material plastically flows into the constricted portion and the piercing element bites the plate material, so that the piercing element can be fixed to the plate material. Therefore, it is possible to prevent the piercing element from falling off the plate material. Second, since the step of punching the plate material and the step of driving the piercing element into the plate material can be performed simultaneously, there is no need to previously provide a hole portion for mounting the piercing element in the plate material. At this time, the punched piece of the punched plate material drops downward through the hole portion of the die. Therefore, an increase in the number of manufacturing steps can be prevented. Third, since the thickness of the piercing element is equal to or less than the thickness of the plate material and the piercing element is driven into the plate material so as to be embedded therein, the piercing element does not protrude from the surface of the plate material and the plate material (welding member) into which the piercing element is driven can be formed with the thickness made uniform. Here, a plan view refers to viewing from a direction perpendicular to the main surface of the plate material. At this time, after the piercing element is driven into the plate material, the preceding punch drops downward through the hole portion of the die.

When the plate material is punched, in a state of holding the piercing element with an element holder, the element holder may be pressed downward to press the piercing element downward.

According to this configuration, since the piercing element can be held by the element holder, the piercing element can be stably driven into the plate material.

Before the plate material is punched, the preceding punch is connected directly below to the piercing element with interposition of a bridging portion having strength to be broken when the piercing element is driven into the plate material. The bridging portion may be broken by a load at a time of punching the plate material, so that the preceding punch may be separated from the piercing element.

According to this configuration, since the piercing element and the preceding punch can be integrated by the bridging portion, it is easy to arrange the piercing element and the preceding punch at the driving position, that is, the positioning is facilitated. In addition, the preceding punch can be arranged directly below the piercing element until the piercing element is driven. If the piercing element is driven into the plate material without arranging the preceding punch directly below the piercing element, burrs may occur. On the other hand, when the preceding punch is arranged directly below the piercing element, since the preceding punch punches the plate material first and the piercing element can be inserted in the plate material with the hole portion formed, the burrs can be prevented from occurring. At this time, as in the case of normal boring, when the preceding punch punches the plate material, it is conceivable that burrs occur, but setting the clearance between the hole portion of the die and the preceding punch to a value that hardly causes burrs can prevent the occurrence of burrs. Therefore, when the piercing element is driven into the plate material, the connection between the piercing element and the preceding punch is released, and the piercing element and the preceding punch can be separated.

Before the plate material is punched, the preceding punch is attracted to the piercing element by electromagnetic force, and after punching the plate material, the electromagnetic force may be released to separate the preceding punch from the piercing element.

According to this configuration, the preceding punch can be electromagnetically attracted to the piercing element until the piercing element is driven. Therefore, in the same manner as described above, since the preceding punch can be arranged directly below the piercing element, the occurrence of burrs when the plate material is punched can be prevented. In particular, it is easy to switch the attraction/separation of the electromagnetic force, and it is easy to separate the preceding punch from the piercing element after the piercing element is driven.

After punching the plate material, the preceding punch may be pushed out downward from the hole portion with a pressing tool and dropped.

According to this configuration, it is easy to drop the preceding punch from the hole portion of the die. In particular, when the diameter of the hole portion of the die and the diameter of the preceding punch are close to each other, it is conceivable that the preceding punch is clogged in the hole portion and does not drop, but since the preceding punch can be pushed out downward by the pressing tool, the preceding punch can be reliably dropped.

The lower portion may be smaller than the upper portion in a plan view.

According to this configuration, plastic flow of the plate material to the constricted portion can be promoted, and the piercing element can be caused to strongly bite the plate material. Specifically, when the piercing element is driven into the plate material, since the lower portion is relatively small in a plan view, the plate material gets over the lower portion and plastically flows into the constricted portion easily. In addition, since the upper portion is relatively large in a plan view, it is difficult for the plate material that has plastically flowed into the constricted portion to get over the upper portion. Therefore, the plastically flown plate material remains in the constricted portion, and the piercing element can be brought into a state of strongly biting the plate material.

A second aspect of the present invention is to provide an element composite including: a main body including an upper portion, a lower portion, and a connecting portion configured to connect the upper portion and the lower portion, the connecting portion being smaller than the upper portion and the lower portion in a plan view, the main body including a constricted portion defined by a lower surface of the upper portion, an upper surface of the lower portion, and a side surface of the connecting portion; a preceding punch arranged directly below the main body, the preceding punch being larger than the lower portion in a plan view; and a bridging portion configured to connect the lower portion and the preceding punch, the bridging portion having strength to be broken when the lower portion and the preceding punch are driven into a plate material.

According to this configuration, when a plate material is machined using the element composite, the plate material can be punched by the preceding punch at the same time as the piercing element is driven into the plate material. Therefore, an increase in the number of machining steps of the plate material can be prevented. In addition, since providing the constricted portion allows the piercing element to bite the plate material, when the piercing element is driven into the plate material, the piercing element can be made to hardly fall off. In addition, since the main body and the preceding punch are integrated by the bridging portion, the main body and the preceding punch can be manufactured integrally as an element composite. In addition, the strength of the bridging portion is strength to such an extent that the bridging portion is broken when the piercing element is driven into the plate material. Thus, when the piercing element is driven into the plate material, the connection between the main body and the preceding punch is released, and the piercing element and the preceding punch can be separated.

A third aspect of the present invention is to provide a welding member including: a plate material; and a piercing element including an upper portion, a lower portion, and a connecting portion configured to connect the upper portion and the lower portion, the connecting portion being smaller than the upper portion and the lower portion in a plan view, the piercing element including a constricted portion defined by a lower surface of the upper portion, an upper surface of the lower portion, and a side surface of the connecting portion, the piercing element having a thickness equal to or less than a thickness of the plate material. The piercing element is embedded in the plate material, and is fixed to the plate material by biting the plate material in the constricted portion.

According to this configuration, it is possible to provide a welding member that solves the above three problems. That is, it is possible to provide a welding member which can prevent the piercing element from falling off the plate material, which can prevent an increase in the number of manufacturing steps, and which can make the thickness uniform.

### EFFECT OF THE INVENTION

According to the present invention, it is possible to provide a method for driving a piercing element for manufacturing a welding member which makes it difficult for the piercing element to fall off the plate material, which prevents an increase in the number of manufacturing steps, and which has a uniform thickness. In addition, an element composite suitable for this method can be provided. Furthermore, a welding member which makes it difficult for the piercing element to fall off, which prevents an increase in the number of manufacturing steps, and which has a uniform thickness can be provided.

### BRIEF DESCRIPTION OF THE DRAWINGS

Fig. 1 is a cross-sectional view showing a first step of a method for driving a piercing element according to one embodiment of the present invention;
Fig. 2 is a cross-sectional view showing a second step of the method for driving a piercing element according to one embodiment of the present invention;
Fig. 3 is a cross-sectional view showing a third step of the method for driving a piercing element according to one embodiment of the present invention;
Fig. 4 is a cross-sectional view showing a fourth step of the method for driving a piercing element according to one embodiment of the present invention;
Fig. 5 is a cross-sectional view showing a fifth step of the method for driving a piercing element according to one embodiment of the present invention;
Fig. 6 is a cross-sectional view showing a sixth step of the method for driving a piercing element according to one embodiment of the present invention;
Fig. 7 is a cross-sectional view of a plate material (welding member) into which a piercing element is driven;
Fig. 8 is a cross-sectional view of a spot-welded joined body;
Fig. 9 is a perspective view of an element composite;
Fig. 10 is a front view of the element composite;
Fig. 11 is a side view of the element composite;
Fig. 12 is a plan view of the element composite;
Fig. 13 is a bottom view of the element composite;
Fig. 14 is a cross-sectional view of the element composite;
Fig. 15 is a cross-sectional view of a bridging portion taken along line A-A in Fig. 10;
Fig. 16 is a cross-sectional view showing a first modified example of the bridging portion in Fig. 15;
Fig. 17 is a cross-sectional view showing a second modified example of the bridging portion in Fig. 15; and
Fig. 18 is a schematic view showing a modified example of the element composite.

### MODE FOR CARRYING OUT THE INVENTION

In the following, embodiments of the present invention will be described with reference to the accompanying drawings.

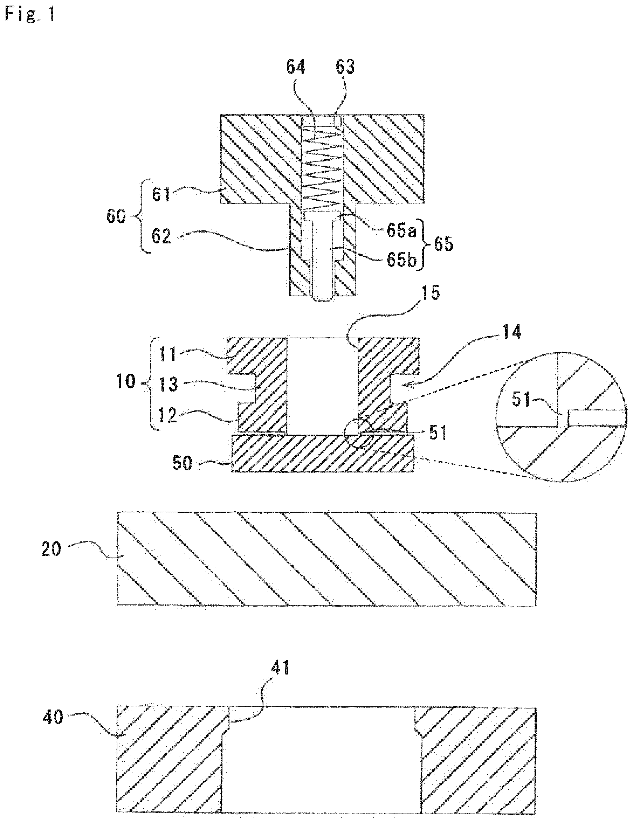

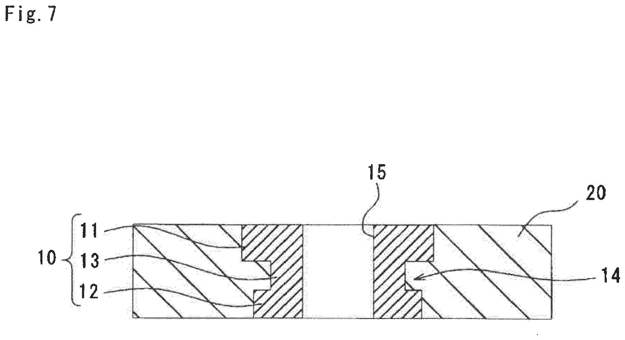

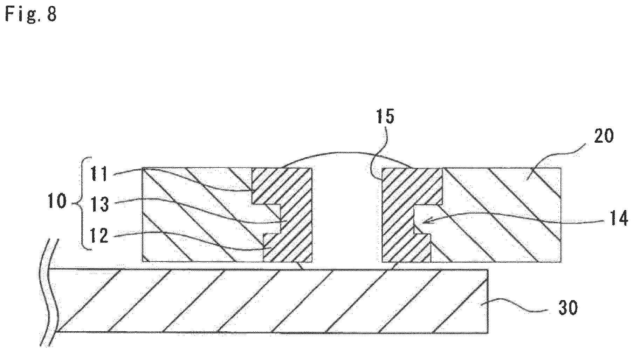

Figs. 1 to 6 are cross-sectional views respectively showing first to sixth steps of a method for driving a piercing element 10 according to one embodiment. In the present embodiment, through these steps, as shown in Fig. 7, a plate material 20 (a welding member 1) into which the piercing element 10 is driven is manufactured. In addition, as shown in Fig. 8, the plate material 20 into which the piercing element 10 is driven is integrated with another plate material 30 by welding.

As shown in Fig. 1, in a first step (preparation step), each member used for the method of driving the piercing element 10 according to the present embodiment is prepared. Specifically, a die 40, the plate material 20, a preceding punch 50, the piercing element 10, and an element holder 60 are prepared.

The die 40 corresponds to a receiving die of a press mold, has a flat upper surface, and has a circular hole portion 41 in a plan view. In the present embodiment, the diameter of the hole portion 41 is about 10.1 mm, for example. In addition, the shape of the hole portion 41 is not limited to a circle, and may be changed according to the shapes of the preceding punch 50 and the piercing element 10.

The plate material 20 is made of a metal, and in the present embodiment, is made of a 5000 series to 6000 series aluminum alloy, for example. The plate material 20 has a thickness to such an extent as can be punched by the piercing element 10 as described below. In the present embodiment, the thickness of the plate material 20 is about 2.0 mm, for example.

The preceding punch 50 corresponds to the pressing die of the press mold, has a substantially cylindrical shape, and has a diameter slightly smaller than the diameter of the hole portion 41 of the die 40 in a plan view. When the plate material 20 is made of an aluminum alloy as in the present embodiment, the clearance between the preceding punch 50 and the hole portion 41 is preferably about 5% of the thickness of the plate material 20. Therefore, in the present embodiment, the clearance between the preceding punch 50 and the hole portion 41 is set to about 0.1 mm. According to this clearance, occurrence of burrs can be prevented when the plate material 20 is punched as described below. From this dimensional relationship, in the present embodiment, the diameter of the preceding punch 50 is about 9.9 mm, for example.

The piercing element 10 includes an upper portion 11, a lower portion 12, and a connecting portion 13 for connecting the upper portion 11 and the lower portion 12. Each of the upper portion 11, the lower portion 12, and the connecting portion 13 is a concentric circle in a plan view. The lower portion 12 has a smaller diameter than the upper portion 11, and the connecting portion 13 has a smaller diameter than the lower portion 12. In addition, the piercing element 10 is thinner than the plate material 20. In the present embodiment, the diameter of the upper portion 11 is, for example, about 10.5 mm, and the height of the upper portion 11 is, for example, about 0.8 mm. In addition, the diameter of the lower portion 12 is, for example, about 9.7 mm, and the height of the lower portion 12 is, for example, about 0.6 mm. In addition, the diameter of the connecting portion 13 is, for example, about 9.3 mm, and the height of the connecting portion 13 is, for example, about 0.6 mm. Therefore, in the present embodiment, the height of the piercing element 10 is about 2.0 mm, which is the same as the thickness of the plate material 20. This shape held by the piercing element 10 causes the constricted portion 14 to be defined by the lower surface of the upper portion 11, the upper surface of the lower portion 12, and the side surface of the connecting portion 13. The piercing element 10 includes, at the center, a through hole 15 that penetrates the upper portion 11, the lower portion 12, and the connecting portion 13. The through hole 15 has a shape into which a protruding portion 62 of an element holder 60 described below can be inserted. The piercing element 10 is made of metal, and in the present embodiment, for example, is made of steel, and preferably has the same type of metal as another plate material 30 described below, the metal being soft.

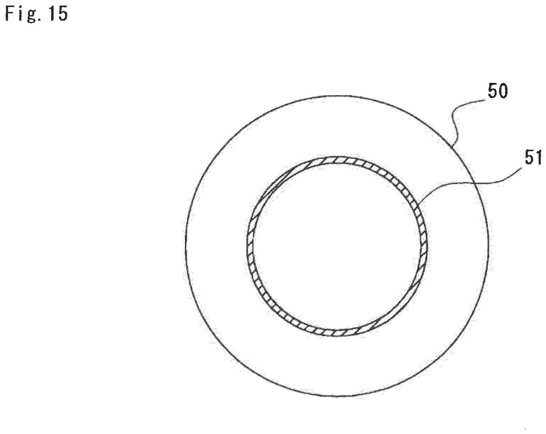

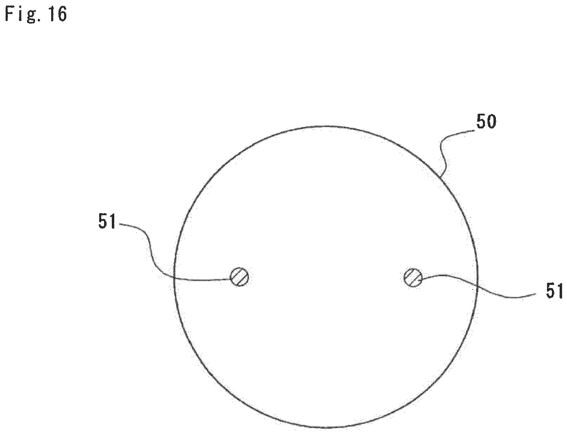

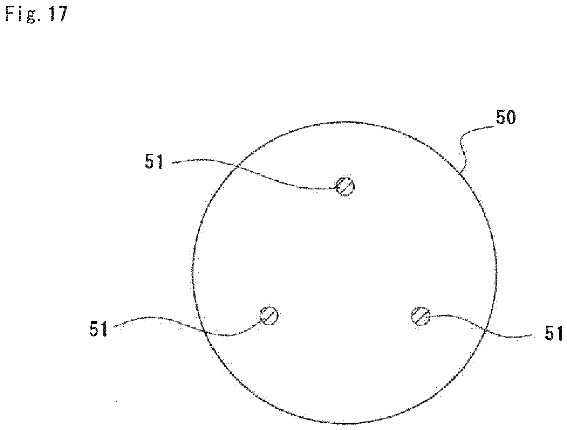

In the present embodiment, the preceding punch 50 and the piercing element 10 are connected by a bridging portion 51. The bridging portion 51 has an annular structure extending continuously 360-degree around the through hole 15 of the piercing element 10 (see Fig. 15). In the present embodiment, the height of the bridging portion 51 is, for example, 0.2 mm, and the radial thickness of the bridging portion 51 is, for example, 0.2 mm. Therefore, the preceding punch 50 is disposed directly below the piercing element 10. This bridging portion 51 has a strength to such an extent as to be broken by a load at the time of punching the plate material 20 as described below. Therefore, when the piercing element 10 is driven into the plate material 20, the connection between the piercing element 10 and the preceding punch 50 is released, and the piercing element 10 and the preceding punch 50 can be separated. It should be noted that the shape of the bridging portion 51 is not limited to an annular shape in a plan view, and may be a shape obtained by intermittently dividing the annular shape or a shape in which a plurality of columnar structures are provided at predetermined intervals (see Figs. 16 and 17). Furthermore, the bridging portion 51 is dispensable, and the preceding punch 50 and the piercing element 10 may be separated.

In the first step (preparation step), the preceding punch 50 and the piercing element 10 are integrated as described above, and the integrated component is referred to as an element composite.

The element holder 60 includes a cylindrical base portion 61 and a protruding portion 62 extending downward from the center of the lower surface of the base portion 61. The protruding portion 62 is concentric with the base portion 61 and has a cylindrical shape smaller in diameter than the base portion 61.

The base portion 61 and the protruding portion 62 are provided with a through hole 63 penetrating them in the concentric axis direction. Inside the through hole 63, a spring member 64 and an ejector pin (pressing tool) 65 are housed. The ejector pin 65 includes a flange portion 65a and a pin main body 65b extending downward from the flange portion 65a. The flange portion 65a has a flat cylindrical shape, and the pin main body 65b has a long cylindrical shape. The flange portion 65a is formed concentrically with the pin main body 65b in a plan view, and has a larger diameter than the pin main body 65b. The diameter of the lower end portion of the through hole 63 has a magnitude to such an extent as to allow the pin main body 65b to pass through but not to allow the flange portion 65a to pass through. Therefore, even if the ejector pin 65 is biased downward by the spring member 64, the ejector pin 65 does not fall off downward from the element holder 60.

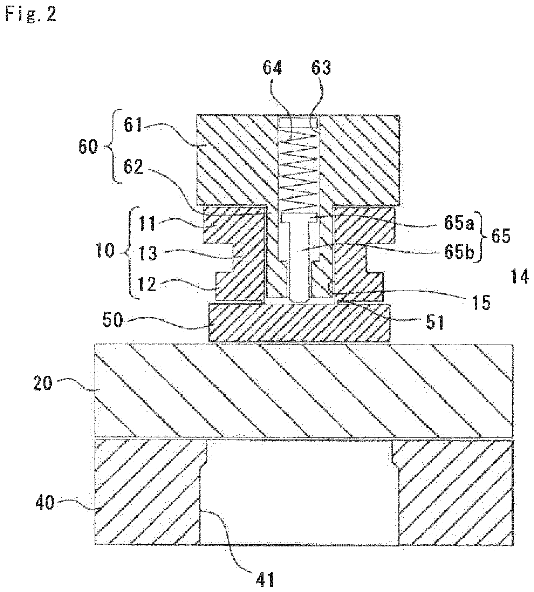

As shown in Fig. 2, in the second step (arranging step), the plate material 20 is arranged on the hole portion 41 of the die 40. In addition, the protruding portion 62 of the element holder 60 is inserted into the through hole 15 of the piercing element 10. Then, the element holder 60, the piercing element 10, and the preceding punch 50 are arranged in order downward from above on a position corresponding to the hole portion 41 of the die 40 on the plate material 20.

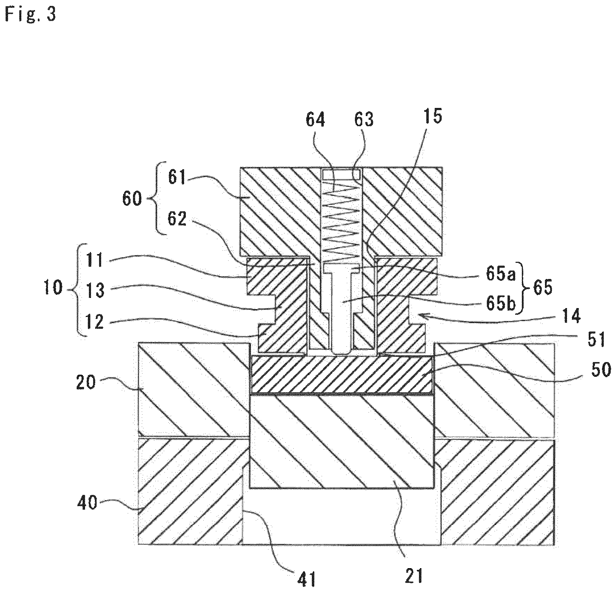

As shown in Fig. 3, in the third step (punching step), moving the element holder 60 downward with the piercing element 10 held by the element holder 60 presses the piercing element 10 downward. Thus, the plate material 20 is punched with the interposition of the preceding punch 50. The bridging portion 51 is broken by the load at the time of punching, and the preceding punch 50 is separated from the piercing element 10.

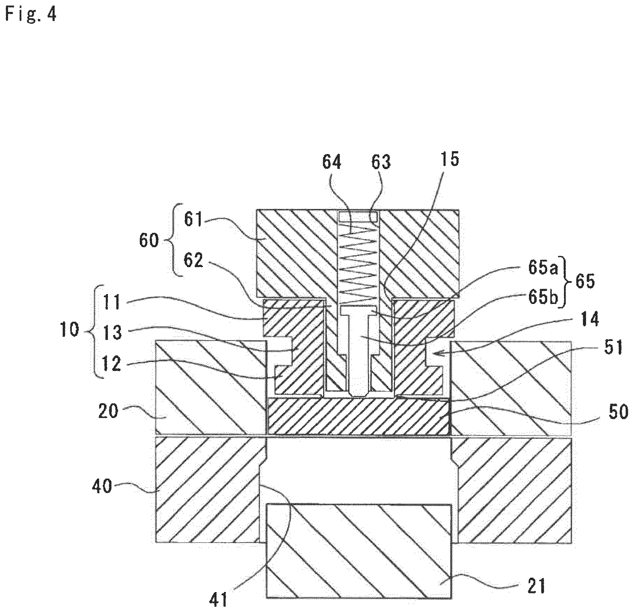

As shown in Fig. 4, in a fourth step (first separation step), a punched piece 21 punched from the plate material 20 in the third step is dropped downward from the hole portion 41.

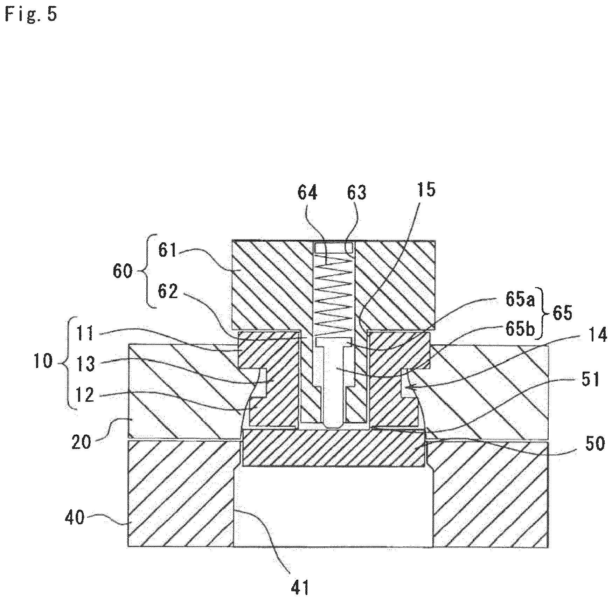

As shown in Fig. 5, in a fifth step (a driving step), following the punching of the plate material 20 and the separation of the punched piece 21 in the third step and the fourth step, the piercing element 10 is driven to be embedded in the plate material 20. Here, "to be embedded" refers to a mode in which the driven piercing element 10 does not protrude from above and below the plate material 20. In the present embodiment, since the piercing element 10 and the plate material 20 have the same thickness, the piercing element 10 can be embedded in the plate material 20. When the piercing element 10 is driven into the plate material 20, the plate material 20 plastically flows into the constricted portion 14, and the piercing element 10 comes into a state of biting the plate material 20. Thus, the piercing element 10 is fixed to the plate material 20.

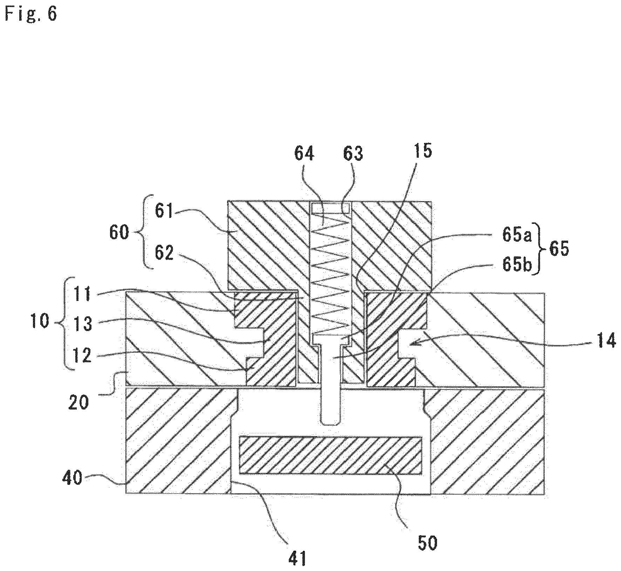

As shown in Fig. 6, in a sixth step (second separation step), the preceding punch 50 is dropped from the hole portion 41 downward. At this time, the preceding punch 50 is pushed out downward by the ejector pin 65. Next, as shown in Fig. 7, the element holder 60 is separated from the piercing element 10.

As shown in Fig. 7, in the welding member 1 formed by the method of driving the piercing element 10 of the present embodiment, the piercing element 10 is embedded in the plate material 20, and the upper and lower surfaces are flat. In addition, the piercing element 10 bites the plate material 20 at the constricted portion 14.

As shown in Fig. 8, in a state where the welding member 1 is arranged to overlap with another plate material 30 of the same type of metal (steel in the present embodiment) as the piercing element 10, the piercing element 10 and the plate material 20 are spot-welded. The mode of welding may be arc welding or the like.

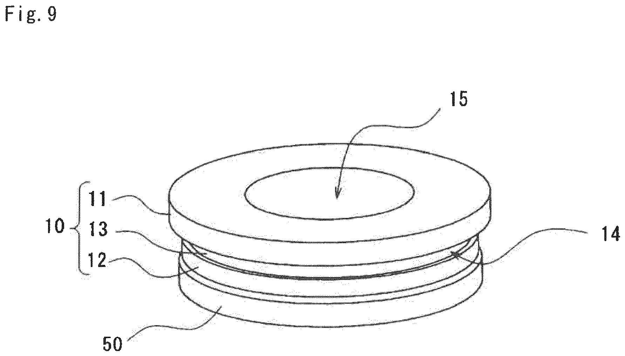

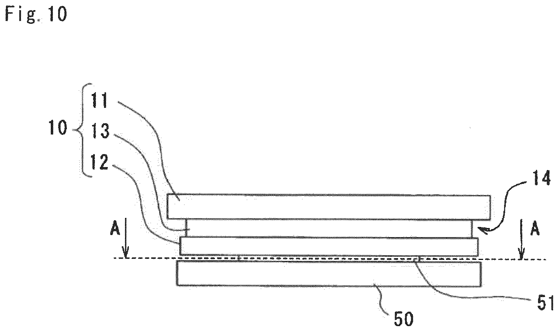

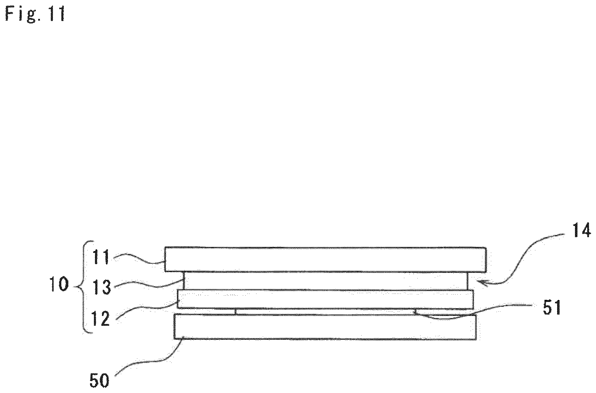

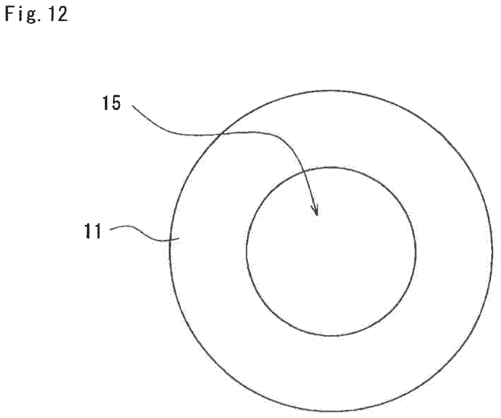

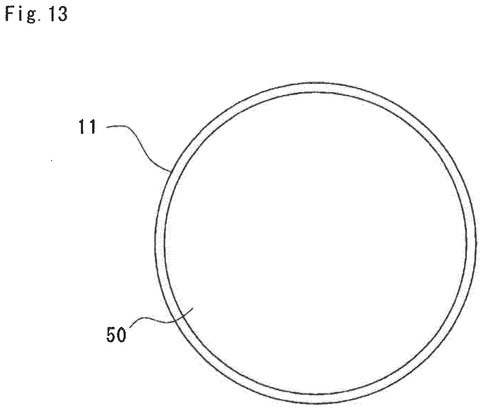

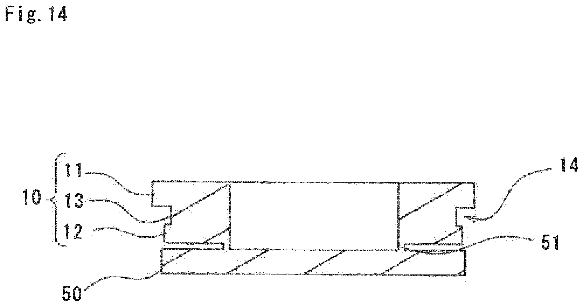

Figs. 9 to 14 are respectively a perspective view, a front view, a side view, a plan view, a bottom view, and a cross-sectional view of the element composite used in the present embodiment. In particular, the rear view is omitted because it is the same as the front view. In addition, since the right-side view and the left-side view are the same, they are shown together as a side view. Furthermore, the front view and the side view are shown separately in Figs. 10 and 11, but the front view and the side view are the same.

In addition, Fig. 15 is a cross-sectional view of the bridging portion 51 taken along line A-A in Fig. 10. As shown in Fig. 15, in the present embodiment, the bridging portion 51 has an annular structure extending continuously 360-degree. However, the shape of the bridging portion 51 is not limited to this, and as modified examples are shown in Figs. 16 and 17, a plurality of bridging portions 51 having a columnar structure may be provided.

According to the present embodiment, the piercing element 10 can be driven into the plate material 20 with the following three effects. Specifically, first, when the piercing element 10 is driven into the plate material 20, the plate material 20 plastically flows into the constricted portion 14 and the piercing element 10 bites the plate material 20, so that the piercing element 10 can be fixed to the plate material 20. Therefore, it is possible to prevent the piercing element 10 from falling off the plate material 20. Second, since the step of punching the plate material 20 and the step of driving the piercing element 10 into the plate material 20 can be performed simultaneously, there is no need to previously provide a hole portion for mounting the piercing element 10 in the plate material 20. Therefore, an increase in the number of manufacturing steps can be prevented. Third, since the thickness of the piercing element 10 is equal to or less than the thickness of the plate material 20 and the piercing element 10 is driven into the plate material 20 so as to be embedded therein, the piercing element 10 does not protrude from the surface of the plate material 20 and the plate material 20 (welding member 1) into which the piercing element 10 is driven can be formed with the thickness made uniform.

In addition, according to the present embodiment, since the piercing element 10 can be held by the element holder 60, the piercing element 10 can be stably driven into the plate material 20.

In addition, according to the present embodiment, the integrated structure of the piercing element 10 and the preceding punch 50 by the bridging portion 51 makes it easy to arrange the piercing element 10 and the preceding punch 50 at the driving position, that is, makes it easy to position them. In addition, the preceding punch 50 can be arranged directly below the piercing element 10 until the piercing element 10 is driven. If the piercing element 10 is driven into the plate material 20 without arranging the preceding punch 50 directly below the piercing element 10, burrs may occur. On the other hand, when the preceding punch 50 is arranged directly below the piercing element 10, since the preceding punch 50 punches the plate material 20 first and the piercing element 10 can be inserted in the plate material 20 with the hole portion formed, the burrs can be prevented from occurring. At this time, as in the case of normal boring, when the preceding punch 50 punches the plate material 20, it is conceivable that burrs occur, but setting the clearance between the hole portion 41 of the die 40 and the preceding punch 50 to a value that hardly causes burrs can prevent the occurrence of burrs.

In addition, according to the present embodiment, the ejector pin 65 makes it easy to drop the preceding punch 50 from the hole portion 41 of the die 40. In particular, when the diameter of the hole portion of the die and the diameter of the preceding punch are close to each other, it is conceivable that the preceding punch may be clogged in the hole portion and may not drop, but since the preceding punch can be pushed out downward by the pressing tool, the preceding punch can be reliably dropped.

In addition, according to the present embodiment, plastic flow of the plate material 20 to the constricted portion 14 can be promoted, and the piercing element 10 can be caused to strongly bite the plate material 20. Specifically, when the piercing element 10 is driven into the plate material 20, since the lower portion 12 is relatively small in a plan view, the plate material 20 gets over the lower portion 12 and plastically flows into the constricted portion 14 easily. In addition, since the upper portion 11 is relatively large in a plan view, it is difficult for the plate material 20 that has plastically flowed into the constricted portion 14 to get over the upper portion 11. Therefore, the plastically flown plate material 20 remains in the constricted portion 14, and the piercing element 10 can be brought into a state of strongly biting the plate material 20.

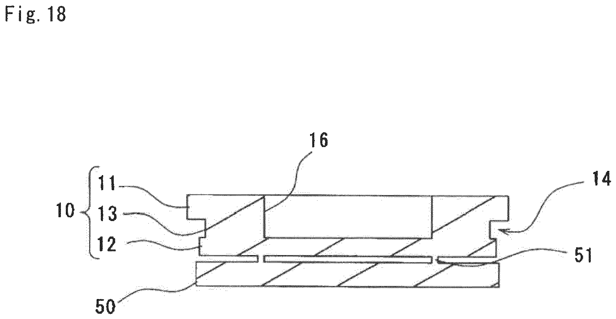

As shown in Fig. 18, as a modified example of the above embodiment, the piercing element 10 may not be provided with the through hole 15 (see Fig. 1 and the like), and may be provided with a hole 16 having a bottom. In this case, the mode of welding may be arc welding, laser welding, or the like.

In addition, the preceding punch 50 may be attracted to the piercing element 10 by an electromagnetic force. Specifically, before punching the plate material 20, the preceding punch 50 may be attracted to the piercing element 10 by the electromagnetic force, and after punching the plate material 20, the electromagnetic force may be released, and the preceding punch 50 may be separated from the piercing element 10.

According to the present modified example, the preceding punch 50 can be electromagnetically attracted to the piercing element 10 until the piercing element 10 is driven. Therefore, in the same manner as described above, since the preceding punch 50 can be arranged directly below the piercing element 10, the occurrence of burrs when the plate material 20 is punched can be prevented. In particular, it is easy to switch the attraction/separation of the electromagnetic force, and it is easy to separate the preceding punch 50 from the piercing element 10 after the piercing element 10 is driven.

As described above, although the specific embodiments and their modified examples of the present invention are described, the present invention is not limited to the above-described embodiments, and can be implemented with various modifications within the scope of the present invention. For example, the material of each member is not limited to those described above, and may be any material. In addition, the shape of each member in plan view is not limited to a circle, and may be any shape such as a polygonal shape.

### DESCRIPTION OF SYMBOLS

- 1: Welding member
- 10: Piercing element
- 11: Upper portion
- 12: Lower portion
- 13: Connecting portion
- 14: Constricted portion
- 15: Through hole
- 16: Hole
- 20: Plate material
- 21: Punched piece
- 30: Plate material
- 40: Die
- 41: Hole portion
- 50: Preceding punch
- 51: Bridging portion
- 60: Element holder
- 61: Base portion
- 62: Protruding portion
- 63: Through hole
- 64: Spring member
- 65: Ejector pin (Pressing tool)
- 65a: Flange portion
- 65b: Pin main body

## Claims

1. A method for driving a piercing element, the method comprising:
preparing
a plate material made of metal,
a piercing element including an upper portion, a lower portion, and a connecting portion configured to connect the upper portion and the lower portion, the connecting portion being smaller than the upper portion and the lower portion in a plan view, the piercing element including a constricted portion defined by a lower surface of the upper portion, an upper surface of the lower portion, and a side surface of the connecting portion, the piercing element having a thickness equal to or less than a thickness of the plate material,
a preceding punch being larger than the lower portion in a plan view, and
a die having a larger hole portion than the preceding punch in a plan view;
arranging the plate material on the hole portion of the die;
arranging the piercing element and the preceding punch in order downward from above on the plate material and on a position corresponding to the hole portion;
punching the plate material via the preceding punch by pressing the piercing element downward, and driving the piercing element to be embedded in the plate material; and
fixing the piercing element to the plate material by the plate material biting the constricted portion due to the plastic deformation of the plate material in the driving.

2. The method for driving a piercing element according to claim 1, further comprising pressing an element holder downward to press the piercing element downward in a state of holding the piercing element with the element holder when punching the plate material.

3. The method for driving a piercing element according to claim 1 or 2, wherein before the plate material is punched, the preceding punch is connected directly below to the piercing element with interposition of a bridging portion having strength to be broken when the piercing element is driven into the plate material,
the method further comprising breaking the bridging portion with a load at a time of punching the plate material, and separating the preceding punch from the piercing element.

4. The method for driving a piercing element according to claim 1 or 2, wherein before the plate material is punched, the preceding punch is attracted to the piercing element by electromagnetic force,
the method further comprising, after punching the plate material, releasing the electromagnetic force to separate the preceding punch from the piercing element.

5. The method for driving a piercing element according to claim 1 or 2, further comprising after punching the plate material, pushing out the preceding punch downward from the hole portion with a pressing tool, and dropping the preceding punch.

6. The method for driving a piercing element according to claim 1 or 2, wherein the lower portion is smaller than the upper portion in a plan view.

7. An element composite comprising:
a main body including an upper portion, a lower portion, and a connecting portion configured to connect the upper portion and the lower portion, the connecting portion being smaller than the upper portion and the lower portion in a plan view, the main body including a constricted portion defined by a lower surface of the upper portion, an upper surface of the lower portion, and a side surface of the connecting portion;
a preceding punch arranged directly below the main body, the preceding punch being larger than the lower portion in a plan view; and
a bridging portion configured to connect the lower portion and the preceding punch, the bridging portion having strength to be broken when the lower portion and the preceding punch are driven into a plate material.

8. A welding member comprising:
a plate material; and
a piercing element including an upper portion, a lower portion, and a connecting portion configured to connect the upper portion and the lower portion, the connecting portion being smaller than the upper portion and the lower portion in a plan view, the piercing element including a constricted portion defined by a lower surface of the upper portion, an upper surface of the lower portion, and a side surface of the connecting portion, the piercing element having a thickness equal to or less than a thickness of the plate material,
wherein the piercing element is embedded in the plate material, and is fixed to the plate material by biting the plate material in the constricted portion.
